**Europäisches Patentamt**

**European Patent Office**

**Office européen des brevets**

(11) Veröffentlichungsnummer: **0 093 918**
**A1**

## (12) EUROPÄISCHE PATENTANMELDUNG

(21) Anmeldenummer: **83103944.1**

(22) Anmeldetag: **22.04.83**

(51) Int. Cl.³: **C 09 K 3/10,** C 08 L 23/22,
C 08 L 83/04
// C03C27/10

(30) Priorität: **10.05.82 DE 3217516**

(43) Veröffentlichungstag der Anmeldung: **16.11.83**
**Patentblatt 83/46**

(84) Benannte Vertragsstaaten: **AT BE DE FR GB IT NL**

(71) Anmelder: **Teroson GmbH, Hans-Bunte-Strasse 4,
D-6900 Heidelberg 1 (DE)**

(72) Erfinder: **Schwebel, Georg, Uhlandstrasse 14,
D-6904 Eppelheim (DE)**
Erfinder: **Lipponer, Gerhard, Ziegelhäuser Strasse 54,
D-6901 Schönau (DE)**

(74) Vertreter: **UEXKÜLL & STOLBERG Patentanwälte,
Beselerstrasse 4, D-2000 Hamburg 52 (DE)**

(54) Dichtstoff auf Basis von Butylkautschuk und/oder Polyisobutylen.

(57) Es werden neuartige Butylkautschuk- und/oder Polyisobutylen-Dichtstoffe durch Beimischung von Silikondichtstoffen zu bekannten Butylkautschuk- und/oder Polyisobutylen-Dichtstoffen hergestellt. Die neuen Dichtstoffgemische sind homogen und lagerstabil, verfügen über die Vorteile beider Einzelkomponenten und sind zur Verwendung als dauerelastische Fugendichtungen geeignet, insbesondere in der Verglasung.

0093918

## Dichtstoff auf Basis von Butylkautschuk und/oder Polyisobutylen

Die Erfindung betrifft neuartige spritzbare Butylkautschuk- und/oder Polyisobutylen-Dichtstoffe.

Herkömmliche spritzbare Butyldichtstoffe erstarren durch Lösungsmittelabgabe zu plastischen Massen. Diese sind wenig elastisch und haften schlecht auf glatten Oberflächen wie Glas oder Metall; sie sind daher zur Verwendung in Verglasungs- und Dehnungsfugen sowie für andere dauerelastische Abdichtungen ungeeignet. Diese Einsatzgebiete waren bisher in erster Linie Dichtstoffen auf Basis von Silikonen, Polysulfiden oder Polyurethanen vorbehalten. Einkomponenten-Silikondichtungsmassen unterliegen bei Zutritt von Luftfeuchtigkeit einem echten Härtungsprozeß und bilden eine dauerelastische Masse, die beispielsweise auf Glas oder Metall gut haftet. Allerdings sind sie im allgemeinen nicht überlackierbar und darüber hinaus sehr viel teurer als Butyldichtmassen.

Es wurde bereits versucht, die physikalischen und wirtschaftlichen Eigenschaften von Silikondichtungsmassen durch Einarbeitung von Organopolymeren zu verbessern. So beschreibt die DE-PS 23 64 856 die Verwendung von niedermolekularen Polybutenen anstelle von Silikonölen als Weichmacher in Silikondichtungsmassen. In "Elastomere", Mai 81, Seite 24 wird über die Eignung flüssiger 1,2-Polybutadiene als Coelastomere für Silikonkautschuk berichtet und die US-PS 39 56 419 beschreibt ein Verfahren zur Herstellung organischer, verstärkender Füller für Silikonkautschuk. In den genannten Fällen handelt es sich aber grundsätzlich um Silikondichtungsmassen, denen zwar organische Polymere als Weichmacher oder Füllstoffe zur Verbilligung und Verbesserung der physikalischen Eigenschaften, wie z.B. des Elastizitätsmoduls, zugesetzt werden, bei denen aber das Eigenschaftsbild des Silikonkautschuks erhalten bleibt.

Demgegenüber ist es Aufgabe der Erfindung, neuartige Butyldichtstoffe zur Verfügung zu stellen, die aufgrund eines angehobenen Eigenschaftsbildes auch zum Einsatz auf den bisher den Silikonen vorbehaltenen Gebieten geeignet sind, bei denen jedoch die Vorteile der Butyldichtstoffe, wie Überlackierbarkeit und niedriger Preis, weitgehend erhalten bleiben.

Die bisherigen Erfahrungen sprachen für die Annahme, daß Silikone nicht mit hochmolekularen Organopolymeren verträglich mischbar sind. Wenn bei Mischungsversuchen überhaupt homogene Systeme erhalten wurden, so härteten diese entweder vorzeitig oder gar nicht. Diese Ansicht wird ebenfalls durch den Inhalt der DE-PS 23 64 856 bestätigt. Die dort beschriebenen Silikondichtungsmassen enthalten als Weichmacher Polybutene mit einem Molekulargewicht von weniger als 600. Die Qualität der erhaltenen Dichtungsmassen nimmt mit steigendem Molekulargewicht der zugesetzten Polybutene ab.

Bei Versuchen zur Lösung der vorliegenden Aufgabe zeigte sich überraschenderweise, daß bisher für unverträglich gehaltene Dichtstoffsysteme, nämlich Butyl- und Silikondichtstoffe, unter bestimmten Voraussetzungen miteinander mischbar sind und daß die Gemische zu neuartigen, lagerstabilen Dichtstoffen führen. Bei diesen Gemischen handelt es sich grundsätzlich um Butyldichtstoffe mit den diesen Dichtungsmassen eigenen Vorteilen. Durch die Beimischung von reaktiven Silikonpolymersystemen wird jedoch das Eigenschaftsbild der Butyldichtstoffe erheblich angehoben. Bei Luftfeuchtezutritt findet eine echte Härtung der Gemische zu dauerelastischen Dichtungsmassen statt, die gut auf glatten Flächen wie Glas oder Metall haften.

Gegenstand der Erfindung ist demgemäß ein Dichtstoff auf Basis von Butylkautschuk und/oder Polyisobutylen, der dadurch gekennzeichnet ist, daß er a) 30 bis 90, vorzugsweise 50 bis .70 Gew.% eines Dichtstoffgrundgemisches aus i) 1 bis 20, vorzugsweise 2 bis 10 Gewichtsteilen eines hochmolekularen Butylkautschuks mit einem mittleren Molekulargewicht von 35 000 bis 55 000 und/ oder hochmolekularen Polyisobutylens mit einem mittleren Molekulargewicht von 10 000 bis 200 000, und ii) 80 bis 99 Gewichtsteilen üblicher Weichmacher, Lösungsmittel, Füllstoffe und sonstiger Zusätze sowie gegebenenfalls weiterer Organopolymerer und b) 10 bis 70, vorzugsweise 20 bis 60, insbesondere 25 bis 50 Gew.% einer reaktiven Einkomponenten-Silikondichtungsmasse aus i) 5 bis 50, vorzugsweise 20 bis 40 und insbesondere 30 bis 40 Gewichtsteilen eines Silikonpolymers, ii) 2 bis 37, vorzugsweise 10 bis 30 und insbesondere 20 bis 25 Gewichtsteilen eines Silikonweichmachers und iii) 1 bis 13 und vorzugsweise 3 bis 8 Gewichtsteilen eines Beschleunigers sowie iv) gegebenenfalls üblichen Füllstoffen und anderen Zusätzen enthält.

Besonders geeignete Silikonpolymere sind difunktionelle Polysiloxane mit einer Viskosität von 20 bis 100 Pa.s bei 20° C. Als Weichmacher werden Silikonöle bevorzugt, wobei Organopolysiloxane mit Viskositäten von 100 mPa.s bis 5 Pa.s bei 20° C besonders geeignet sind. Als Beschleuniger werden Aminosilane bevorzugt, es kommen aber auch andere übliche Beschleuniger wie Acetoxysilane, Ketoximosilane oder Benzamidosilane in Betracht. Ein im Rahmen der Erfindung besonders bevorzugter Beschleuniger ist Methyltricyclohexylaminosilan.

Das Dichtstoffgrundgemisch kann neben dem Butylkautschuk und/oder Polyisobutylen noch weitere hochmolekulare Organopolymere wie beispielsweise Styrol-Butadien-Kautschuk enthalten. Weiterhin können das Grundgemisch sowie gegebenenfalls die Silikondichtmasse die üblichen Weichmacher, beispielsweise aromatische Öle, naphthenische Öle oder nieder- bis mittelmolekulare Polybutene mit einem Molekulargewicht von etwa 100 bis 10 000 enthalten, ferner Füllstoffe wie beispielsweise amorphes, gefälltes oder gecoatetes Calciumcarbobat, Schwerspatmetall oder Talk und Lösungsmittel wie aliphatische oder aromatische Kohlenwasserstoffe, Ketone oder Ester. Als weitere Zusätze kommen Pigmente wie beispielsweise Titandioxid, Zinksulfid, Ruß oder Eisenoxid, Thixotropiemittel wie beispielsweise amorphes Siliciumdioxid, pyrogenes Siliciumdioxid, Kieselgur, Montmorillonit oder hydriertes Rizinusöl und spezielle Zusätze wie beispielsweise Leinölfettsäre, Sojaölfettsäure, Silane und Molekularsiebe wie Zeolith 4A in Frage.

Zur Herstellung der erfindungsgemäßen neuartigen Butylkautschuk- und/oder Polyisobutyldichtstoffe wird zunächst auf herkömmliche Weise ein Butyldichtstoffgrundgemisch hergestellt. Der Gehalt an Butylkautschuk und/oder Polyisobutylen in diesem Gemisch beträgt etwa 1 bis 20, vorzugsweise 1 bis 10 Gew.%, bezogen auf das Grundgemisch. Darüber hinaus können dem Gemisch weitere hochmolekulare Organopolymere, wie beispielsweise Styrol-Butadien-Kautschuk in einer Menge von 1 bis 10 und vorzugsweise 1 bis 5 Gew.%, bezogen auf das Grundgemisch, beigemischt werden. Als Butylkautschuk ist gegebenenfalls auch ein Butylkautschuk-Regenerat, d.h. ein vulkanisierter und regenerierter Kautschuk mit einem IIR-Anteil von ca. 50% brauchbar.

Das Butylkautschuk- und/oder Polyisobutylengrundgemisch wird anschließend in einer geeigneten Misch- und Homogenisiervorrichtung entweder mit einer vollständigen stabilen Einkomponenten-Silikondichtungsmasse mit den in der Silikondichtungsmasse enthaltenen Rohstoffen oder nur mit deren wesentlichen Rohstoffen vermischt.

Um eine erfindungsgemäße Dichtungsmasse mit guten technischen Eigenschaften zu erhalten, ist es erforderlich, der Grundmischung mindestens ein Silikonpolymer, einen Silikonweichmacher und einen geeigneten Beschleuniger für das Silikonpolymer zuzusetzen. Zur Herstellung einer technisch hochwertigen Dichtungsmasse soll das Silikonpolymer, vorzugsweise ein difunktionelles Polysiloxan, in einer Menge von Polysiloxan in einer Menge von 2 bis 25, vorzugsweise 5 bis 20 und in besonders bevorzugter Weise 10 bis 20 Gew.%, bezogen auf das Endprodukt, enthalten sein. Die erforderliche Menge an Silikonweichmacher, vorzugsweise einem Silikonöl, beträgt 2 bis 25, vorzugsweise 5 bis 15 Gew.%, bezogen auf das Endprodukt. Der Beschleuniger, vorzugsweise ein Aminosilan, soll in einer Menge von 0,1 bis 4, vorzugsweise 1 bis 3 Gew.%, bezogen auf das Endprodukt vorhanden sein. Der Beschleuniger muß, wie bei derartigen Einkomponenten-Silikondichttoffen üblich, wenigstens gering überdosiert werden, da sonst die Lagerstabilität des Endproduktes nicht gewährleistet ist.

Die so erhaltenen Dichtstoffgemische härten an der Luft bei Raumtemperatur zu elastischen Massen, die aufgrund ihrer vorzüglichen Haftung auf glatten Oberflächen wie Glas und Aluminium zur Verwendung als dauerelastische Abdichtungen geeignet sind. Sie sind lackverträglich, es tritt bei ihrer Verarbeitung geringer oder kein Fadenzug auf und ihre Kosten liegen weit unter denjenigen für Silikone.

Die erfindungsgemäßen Dichtstoffgemische sind lagerstabil sowie lichtbeständig, es wurde kein Ausschwitzen der Weichmacher beobachtet. Nachfolgend wird die Erfindung anhand von Beispielen erläutert, ohne jedoch auf diese beschränkt zu sein.

Gemäß einer besonderen Ausführungsform der Erfindung werden den Dichtstoffen bestimmte Alterungsschutzmittel zugesetzt, um deren Haftung auf Glas nach 7 Tagen UV-Bestrahlung/Wasseralterung (Test gemäß DIN 52 455, Teil 3) zu verbessern. Bezogen auf den Dichtstoff beträgt die Menge an Alterungsschutzmitel günstiger Weise 0,02 bis 3 Gew.%. Besonders bevorzugte Verbindungen sind Nickel-dibutyldithiocarbamat, [2,2'-Thiobis-(4-t-octylphenolato)] -n-butylamin-nickel(II) und 1,10-Decandicarbonsäure-di-(4-hydroxy-piperidyl)-ester bzw. Gemische dieser Verbindungen. Bereits Mengen von 0,05 bis 0,2 Gew.% dieser Alterungsschutzmittel (bezogen auf die Gesamtmischung) bewirken einen sehr guten Alterungsschutz, so daß der oben erwähnte DIN-Test bestanden wird.

## Beispiel 1

Herstellung eines Butylkautschuk-Silikon-Dichtstoffgemisches.

In einem Kneter wurden 60 Gewichtsteile (GT) eines Gemisches aus 67 % Butylkautschuk und 33 % Paraffinöl mit 90 GT Paraffinöl, 20 GT eines mittelmolekularen Polyisobutylens (Molekulargewicht ca. 8000), 30 GT Zinksulfid, 600 GT amorphem Calciumcarbonat und 50 GT Xylol vermischt und zu einer homogenen Masse verknetet.

680 GT der so gewonnenen Butylkautschuk-Grundmischung wurden in einem evakuierbaren Planetenmischer vorgelegt und mit 120 GT difunktionellem Polysiloxan (Visk. 80 Pa.s bei $20^o$ C), 70 GT Silikonöl (Visk. ca. 1 Pa.s bei $20^o$ C), 10 GT Molekularsieb Zeolith 4A, 60 GT gefälltem Calciumcarbonat, 40 GT Benzin und 20 GT Methyltricyclohexylaminosilan als Vernetzer homogen vermischt.

Das spezifische Gewicht dieses Gemisches betrug etwa 1,5 g/cm$^3$, der Modul bei 70 - 90 % Bruchdehnung (kohäsiver Bruch) lag nach DIN 52455 bei 0,3 - 0,4 N/cm$^2$, das Rückstellvermögen nach DIN 52458 betrug ca. 90 %. In einem Alterungstest mit wechselnden Belastungen von UV-Strahlung, Wärme und Beregnung (im Testgerät "Xeno-Test 1200" der Fa. Original-Hanau GmbH., Hanau) konnten nach 500 h keine Änderungen der Oberfläche, keine Risse oder sonstigen Veränderungen festgestellt werden. Das reaktive Dichtstoffgemisch war über 6 Monate bei $20^o$ C und bei $40^o$ C ohne Beeinträchtigung des Härtungs- sowie Haftungsverhaltens lagerstabil. Hautbildung trat nach 10 - 30 Min. ein, die Durchhärtung erforderte je nach Schichtdicke 1 - 4 Tage.

Die Shore-A-Härte betrug nach 6 Monaten bei RT 23 und veränderte sich bei Bewitterung über 3 Monate oder im genannten Testgerät "Xeno-Test 1200" nach 3000 h nicht. Auch eine Verfärbung trat unter diesen Bedingungen nicht ein.

## Beispiel 2

A. Herstellung einer Butylkautschuk-Polyisobutylen-Dichtmasse (Vergleich)

95 GT einer Kautschuk-Vormischung aus 60 % Butyl-Kautschuk (IIR), 20 % hochmolekularem Polyisobutylen (PIB) (MG ca. 200 000) und 20 % Styrol-Butadien-Kautschuk (SBR) wurden mit 95 GT Paraffinöl, 515 GT amorpher Kreide, 34 GT Zinksulfid, 17 GT Polyisobutylen (MG ca. 1000), 9 GT Rizinusöl und 85 GT Schwerspatmehl im Kneter vermischt und homogenisiert. Zu dieser Mischung wurden langsam 150 GT Benzin zugegeben und ebenfalls glatt und knotenfrei geknetet.

Diese Dichtungsmasse, die neben IIR und PIB auch einen kleinen Anteil an SBR, jedoch kein reaktives Silikonpolymer und keinen Silikon-Weichmacher enthielt, zeigte das typische, rein plastische Verhalten der bekannten lösungsmittelhaltigen Butyl/PIB-Dichtstoffe. Selbst nach Verdunsten der Lösungsmittel war die verbleibende Masse plastisch verformbar und ohne merkliche elastische Anteile. Deshalb waren Werte wie Bruchdehnung, Modul und Rückstellvermögen nicht meßbar. Die Haftung zu Aluminium oder Glas war nur adhäsiv, d.h. beim Abziehen der getrockneten Masse von diesen Untergründen löste sich die Masse rückstandslos. Das spezifische Gewicht betrug ca. 1,45 g/cm$^3$.

B. Herstellung einer IIR/PIB/SBR-Silikon-Mischung

Zu 60 GT der IIR/PIB/SBR-Mischung aus Beispiel 2A wurden in einem Planetenmischer 17 GT amorphe Kreide, 1 GT Molekularsieb Zeolith 4A, 12 GT difunktionelles Polysiloxan (Visk. 80 Pa.s bei 20° C), 8 GT Silikonöl (Visk. ca. 1 Pa.s bei 20° C), und 2 GT Methyltricyclohexylaminosilan nacheinander hinzugefügt und unter Vakuum homogen vermischt.

Die Lagerstabilität und die technischen Eigenschaften dieser Mischung wurden auf die gleiche Weise bestimmt, wie in Beispiel 1 beschrieben. Die Ergebnisse entsprachen denjenigen des Beispiels 1.

## Beispiel 3

Herstellung eines erfindungsgemäßen Dichtstoffes aus zwei gesondert hergestellten vollständigen Dichtungsmassen.

500 GT einer für sich stabilen, handelsüblichen, aminofunktionellen Silikon-Dichtmasse, bestehend aus

320 GT Silikonpolymer gemäß Beispiel 1,
50 GT Titandioxid,
10 GT Molekularsieb Zeolith 4A,
40 GT Methyltricyclohexylaminosilan,
200 GT Silikonöl gemäß Beispiel 1,
20 GT hochdisperser Kieselsäure,
360 GT Calciumcarbonatpulver

wurden mit 500 GT der in Beispiel 1 beschriebenen Butyl-Kautschuk-Grundmischung im Vakuum vermischt und homogenisiert.

Auch diese Mischung zeigte Glas- und Aluminium-Haftung, härtete elastisch aus und war lagerstabil.

Die ermittelten technischen Eigenschaften des Dichtstoffes entsprachen denjenigen des Dichtstoffes des Beispiels 1.

## Beispiel 4

In einem Kneter werden 95 GT einer Mischung aus 60% Butylkautschuk, 20% Polyisobutylen (MG ca. 200.000) und 20% Styrol-Butadien-Kautschuk mit 94 GT Paraffinöl, 20 GT PIB (MG ca. 8.000), 541 GT amorphem Calciumcarbonat, 100 GT Bariumsulfatmehl und 150 GT Benzin (Siedegrenzen 80 bis 110°C) zu einer homogenen Masse verknetet.

600 GT der so gewonnenen Kautschuk-Grundmischung werden in einem evakuierbaren Planetenmischer vorgelegt und mit 98 GT amorphem Calciumcarbonat, 10 GT Molekularsieb Zeolith 4A, 120 GT Polysiloxan gem. Beispiel 1, 110 GT einer Mischung aus 91% Silikonöl gem. Beispiel 1 und 9% hochdisperser Kieselsäure (BET-Oberfläche ca. 130 $m^2$/g), 40 GT Titandioxid (Rutil), 1 GT Nickeldibutyldithiocarbamat, 1 GT 1,10- Decandicarbonsäure-di-(4-hydroxypiperidyl)-ester und 20 GT Methyltricyclohexylaminosilan homogen gemischt.

## Beispiel 5

Der Dichtstoff dieses Beispiels 5 entspricht Beispiel 4, jedoch ohne die beiden Alterungsschutzmittel.

## Beispiel 6

In einem Kneter werden 100 GT handelsübliches Butyl-Kautschuk-Regenerat mit ca. 50% Polymeranteil, 45 GT Styrol-Butadien-Kautschuk, 95 GT Paraffinöl, 520 GT amorphes Calciumcarbonat, 70 GT PIB (MG ca. 8.000), 100 GT Bariumsulfatmehl und 70 GT Benzin (Siedegrenzen 80 - 110°C) zu einer homogenen Masse verknetet.

600 GT der so gewonnenen Grundmischung werden analog zum Beispiel 4 mit den gleichen Mengen der dortigen Bestandteile im Vakuum vermischt.

Tabelle

| Techn. Daten | Beispiel 4 | Beispiel 5 | Beispiel 6 |
|---|---|---|---|
| Lagerstabilität | in luftdichten Kartuschen mehr als 3 Mon. | | |
| spez. Gew., g/cm$^3$ | ca. 1,45 | ca. 1,45 | ca. 1,48 |
| Hautbildung | 5-10 Min. | 5 -10 Min. | 5-10 min. |
| mechan. Werte an Glasprüfkörpern nach DIN 52455, Teil 1 (Lagerung bei RT) | | | |
| 100% Modul, N/cm$^2$ | 28 | 28 | 13 |
| Bruchdehnung, % | 150 | 150 | 140 |
| Bruchart | kohäsiv | kohäsiv | kohäsiv |
| Werte nach DIN 52455 Teil 3 (beinhaltet (UV/Wasser-Lagerung) | | | |
| 100% Modul, N/cm$^2$ | 26 | - | 11 |
| Bruchdehnung, % | 145 | 20 | 140 |
| Bruchart | kohäsiv | adhäsiv | kohäsiv |
| Vol.schwund, DIN 52451 | ca. 18% | ca. 18% | ca. 9% |

Die Ergebnisse zeigen, daß die erfindungsgemäßen Alterungsschutzmittel eine zusätzliche Verbesserung der Dichtstoffe bringen, insbesondere bei dem in der Dichtstoffbranche üblichen und anerkannten Alterungstest nach DIN 52 455, Teil 3. Diese Norm ist wiederum als Prüfnorm Bestandteil der Gütenorm DIN 18 545, Teil 2.

Darüber hinaus zeigt das Beispiel 6, daß auch bei reduziertem Volumenschwund und Einsatz eines IIR-Regenerates sehr gute Ergebnisse mit bedeutend niedrigerem Modul erzielbar sind.

0093918

Patentansprüche

1. Dichtstoff auf Basis von Butylkautschuk und/oder Polyisobutylen, dadurch gekennzeichnet, daß er a) 30 bis 90 Gew.% eines Dichtstoffgrundgemisches aus i) 1 bis 20 Gewichtsteilen eines hochmolekularen Butylkautschuks mit einem mittleren Molekulargewicht von 35 000 bis 55 000 und/oder eines hochmolekularen Polyisobutylens mit einem mittleren Molekulargewicht von 10 000 bis 200 000, und ii) üblichen Weichmachern, Lösungsmitteln, Füllstoffen und sonstigen Zusätzen sowie gegebenenfalls weiteren hochmolekularen Organopolymeren in einer Gesamtmenge von 80 bis 99 Gewichtsteilen und b) 10 bis 70 Gew.% einer reaktiven Einkomponenten-Silikondichtungsmasse aus i) 5 bis 50 Gewichtsteilen eines Silikonpolymeren, ii) 2 bis 37 Gewichtsteilen eines Silikonweichmachers und iii) 1 bis 13 Gewichtsteilen eines Beschleunigers sowie iv) gegebenenfalls üblichen Füllstoffen und anderen Zusätzen enthält.

2. Dichtstoff nach Anspruch 1, dadurch gekennzeichnet, daß der Dichtstoff ein Gemisch aus dem Grundgemisch und einer vollständigen Silikondichtungsmasse ist.

3. Dichtstoff nach Anspruch 1, dadurch gekennzeichnet, daß das Grundgemisch die Komponenten der Silikondichtungsmasse enthält.

4. Dichtstoff nach Anspruch 3, dadurch gekennzeichnet, daß das Dichtstoffgemisch ein Silikonpolymeres, einen Silikonweichmacher und einen Härter für das Silikonpolymere enthält.

5. Dichtstoff nach den Ansprüchen 1 bis 4, dadurch gekennzeichnet, daß das Silikonpolymere ein difunktionelles Polysiloxan, der Weichmacher ein Silikonöl und der Beschleuniger ein Aminosilan ist.

6. Dichtstoff nach den Ansprüchen 1 bis 5, dadurch gekennzeichnet, daß das Dichtstoffgrundgemisch neben Butylkautschuk und/oder Polyisobutylen Styrol-Butadien-Kautschuk in einer Menge von 0,5 bis 10 Gew.% bezogen auf das Grundgemisch enthält.

7. Dichtstoff nach den Ansprüchen 1 bis 6, dadurch gekennzeichnet, daß er 0,3 bis 3 Gew.% eines Molekularsiebes enthält.

8. Dichtstoff nach den Ansprüchen 1 bis 7, dadurch gekennzeichnet, daß er ein Alterungsschutzmittel in einer Menge von 0,02 bis 3 Gew.% enthält.

9. Dichtstoff nach Anspruch 8, dadurch gekennzeichnet, daß er als Alterungsschutzmittel Nickel-dibutyldithiocarbamat, [2,2'-Thio-bis(4-t-octylphenolato)]-n-butylamin-nickel(II) oder 1,10-Décandicarbonsäure-di-(4-hydroxypiperidyl)-ester oder Gemische dieser Verbindungen enthält.

10. Verfahren zur Herstellung des Dichtstoffes gemäß den Ansprüchen 1 bis 9, dadurch gekennzeichnet, daß ein Butylkautschuk und/oder Polyisobutylen-Grundgemisch aus 1 bis 20 Gewichtsteilen Butylkautschuk und/oder Polyisobutylen und üblichen Weichmachern, Lösungsmitteln, Füllstoffen und sonstigen Zusätzen sowie gegebenenfalls weiteren Organopolymeren in einer Gesamtmenge von 80 bis 90 Gewichtsteilen hergestellt wird und daß 30 bis 90 Gew.% dieses Grundgemisches mit 10 bis 70 Gew.% einer vollständigen Einkomponenten-Silikondichtungsmasse aus 5 bis 50 Gewichtsteilen eines Silikonpolymeren, 2 bis 37 Gewichtsteilen eines Silikonweichmachers und 1 bis 13 Gewichtsteilen eines Beschleunigers für das Silikonpolymere sowie den üblichen Füllstoffen und anderen Zusätzen oder den einzelnen Rohstoffen der Einkomponenten-Silikondichtungsmasse homogen vermischt werden.

# EUROPÄISCHER RECHERCHENBERICHT

**Nummer der Anmeldung** 0093918

| | EINSCHLÄGIGE DOKUMENTE | | EP 83103944.1 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US - A - 3 220 879 (D.E. STARE et al.)<br><br>* Spalte 1, Zeilen 44-48, 61-63; Spalte 2, Zeilen 28, 29; Beispiel 6; Spalte 5, Zeilen 6-19 *<br><br>-- | 1,2,10 | C 09 K 3/10<br>C 08 L 23/22<br>C 08 L 83/04//<br>C 03 C 27/10 |
| A | DE - A1 - 2 362 584 (TEROSON)<br><br>* Seite 1, Zeilen 1-16 *<br><br>-- | 1 | |
| A | DE - A1 - 2 802 170 (TEROSON)<br><br>* Seite 3, Zeile 4 - Seite 4, Zeile 14; Ansprüche 1-3 *<br><br>-- | 1,4,5 | |
| A | DE - B2 - 2 555 383 (SAINT-GOBAIN)<br><br>* Ansprüche 1,3,4 *<br><br>---- | 1,7 | **RECHERCHIERTE SACHGEBIETE (Int. Cl. 3)**<br><br>C 09 K<br>C 08 L<br>C 03 C |

Der vorliegende Recherchenbericht wurde für alle Patentansprüche erstellt.

| Recherchenort | Abschlußdatum der Recherche | Prüfer |
|---|---|---|
| WIEN | 09-08-1983 | KAHOVEC |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument